# EUROPÄISCHE PATENTANMELDUNG

(11) **EP 1 422 054 A1**
(43) Veröffentlichungstag der Anmeldung: **26.05.2004**
(21) Anmeldenummer: 02026012.1
(22) Anmeldetag: 21.11.2002
(51) Int. Cl.: B32B 15/00, C25D 15/02, C23C 4/02, F01D 5/28

(54) **Schichtsystem für eine Verwenbdung in Gasturbinen**

(71) Anmelder: SIEMENS AKTIENGESELLSCHAFT, 80333 München (DE)
(72) Erfinder: Halberstadt, Knut, 45481 Mühlheim a. d. Ruhr (DE); Stamm, Werner, Dr., 45481 Mühlheim a. d. Ruhr (DE)

(57) **Zusammenfassung**

Schichtsysteme nach dem Stand der Technik weisen oft eine schlechte Haftung der Schichten untereinander oder der Schichten auf dem Substrat auf.

Durch ein erfindungsgemäßes Schichtsystem (1) wird die Oberfläche der Trennfläche (9) zwischen den Schichten vergrößert, so dass die Anbindung und die Haftung verbessert ist.

## Beschreibung

Die Erfindung betrifft ein Schichtsystem gemäß dem Oberbegriff des Anspruchs 1.

Die US-PS 5,952,110 offenbart ein Schichtsystem, bei dem grobe Partikel in einer äusseren Schicht enthalten sind. Die groben Teilchen ragen aus der äußeren Oberfläche heraus und dienen zur Erhöhung des abrasiven Widerstands. Die groben Partikel weisen eine andere chemische Zusammensetzung als die Schicht auf.

Die US-PS 5,579,534 offenbart ein Schichtsystem, das mindestens drei Schichten aufweist, bei dem grobe Teilchen auf einer Schicht aus feineren Teilchen angeordnet sind.

Die US 6,444,331 zeigt eine Bondschicht, die aufgerauht ist, um eine verbesserte Haftung von Wärmedämmschicht und Bondschicht zu erreichen.

Schichtsysteme weisen aber immer noch eine schlecht Haftung der Schichten untereinander oder der Schicht auf einem Substrat auf.

Es ist daher Aufgabe der Erfindung, dieses Problem zu überwinden.

Die Aufgabe wird gelöst durch ein Schichtsystem gemäß des Anspruchs 1.

Weitere vorteilhafte Ausgestaltungen des Schichtsystems sind in den Unteransprüchen aufgelistet. Die vorteilhaften Ausgestaltungen der Unteransprüche können miteinander kombiniert werden.

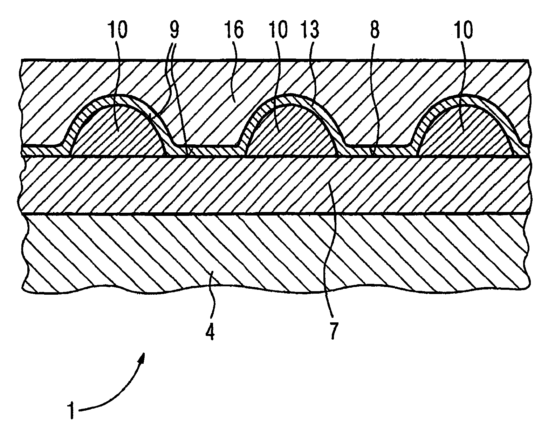

Die Figur zeigt ein Ausführungsbeispiel eines erfindungsgemäßen Schichtsystems 1.

Ein Schichtsystem 1 besteht aus einem Substrat 4, das beispielsweise aus einem keramischen oder einem metallischen Material, insbesondere einer kobalt- oder nickelbasierten Superlegierung, besteht.

Auf dem Substrat 4 ist eine Zwischenschicht 7 angeordnet. Diese Zwischenschicht weist insbesondere eine hohe Dichte auf und besteht im Fall der Superlegierung als Substrat 4 aus der Zusammensetzung des Typs MCrAlY (M= Fe, Co, Ni).

Die Mikrostruktur der Zwischenschicht 7 weist zumindest teilweise feine Teilchen (feine Körnung) auf bzw. ist zumindest teilweise aus Teilchen feiner Körnung hergestellt worden. Feine Körnung bedeutet Korndurchmesser kleiner 22 Mikrometer, insbesondere zwischen 8 und 22 Mikrometer. Der Anteil Teilchen mit feiner Körnung zur Herstellung der Zwischenschicht 7 beträgt bspw. 50%. Insbesondere die Teilchen feiner Körnung erlauben die Herstellung einer dichten Zwischenschicht 7.
Die Teilchen für die Zwischenschicht 7 weisen bspw. Korndurchmesser zwischen 8 und 44 Mikrometer auf.

Die Zwischenschicht 7 kann auf verschiedene Art und Weise hergestellt worden sein: Chemical Vapour Deposition (CVD), Plasmaspritzen (APS, LPPS, VPS,..), High Velocity Oxy Fuel (HVOF) oder andere Beschichtungsmethoden.

Auf der äußeren Oberfläche 8 der Zwischenschicht 7 ist eine möglichst einlagige Schicht aus sehr grobkörnigen Spritzgut 10 aufgebracht, wobei die Korndurchmesser bspw. größer 80 Mikrometer, insbesondere grösser 100 Mikrometer, sind. Dabei wird eine noppenartige Oberfläche gebildet.

Beim Plasmaspritzen wird die Plasmaspritz- Anlage bspw. so eingestellt, dass nur ein Oberflächenbereich der groben Körner 10 aufschmilzt, um eine Haftung der groben Körner 10 auf der Zwischenschicht 7 zu ermöglichen. Die groben Körner 10 weisen bspw. eine Zusammensetzung der Art MCrAlY auf.

Ebenso kann die äußere Oberfläche 8 der Zwischenschicht 7 erwärmt oder aufgeschmolzen werden, d.h. sie ist weich, so dass beim Auftreffen von groben Teilchen 10, insbesondere bei hoher Geschwindigkeit, diese in die Zwischenschicht 7 eindringen und sich dort verankern.

Ebenso können bspw. durch lokales Wachstum auf der Oberfläche 8 grobe Teilchen 10 wachsen gelassen werden, indem lokal auf der Oberfläche 8 verteilt Wachstumskeime vorhanden sind oder die Oberfläche so angeregt ist, dass nur dort Wachstumsbedingungen gegeben sind.

Die Haftoberfläche 9, die von der Zwischenschicht 7 und den groben Teilchen 10 gebildet wird, ist wesentlich größer als die äußere Schicht der noch unbeschichteten Oberfläche 8 der Zwischenschicht 7.

Auf die so hergestellte Struktur von Zwischenschicht 7 und groben Teilchen 10 wird optional eine weitere dünne Schicht 13 (bspw. 40 bis 80 Mikrometer dick) eines Spritzgutes mittelgrober Körner (mittlere Körnung: 22 bis 62 Mikrometer) mittels bekannter Verfahren aufgetragen.

Die vergrösserte Haftoberfläche 9 bleibt erhalten. Durch die bis um vorzugsweise mindestens 20% größere Haftoberfläche 9 wird eine bessere Haftfestigkeit der äußeren Schicht 16 mit dem Schichtsystem 1 erreicht.

Die Schicht 13 weist bspw. eine Zusammensetzung der Art MCrAlY auf.

Die groben Teilchen 10 und die mittleren Teilchen 13 der Schicht 13 können durch atmosphärisches Plasmaspritzen (APS), Niederdruckplasmaspritzen (LPPS), Vakuumplasmaspritzen (VPS), Kaltgasspritzen oder Sprühkompaktspritzen aufgebracht werden.

Auf die Schicht 13 wird eine äußere Schicht 16 aufgetragen.

Die äußere Schicht 16 ist beispielsweise eine keramische Schicht und im Fall der Anwendung für Turbinenbauteile, insbesondere für Gasturbinenbauteile, ist die äußere Schicht 16 eine Wärmedämmschicht.

## Patentansprüche

1. Schichtsystem (1) mit
einem Substrat (4),
einer Zwischenschicht (7) und
einer äußeren Schicht (16),
**dadurch gekennzeichnet, dass**
auf der Zwischenschicht (7) Teilchen (10) grober Körnung vorhanden sind,
auf denen die äußere Schicht (16) aufgebracht ist.

2. Schichtsystem nach Anspruch 1,
**dadurch gekennzeichnet, dass**
auf die groben Teilchen (10) vor Aufbringung der äusseren Schicht (16) eine weitere Schicht (13) aufgebracht ist.

3. Schichtsystem nach Anspruch 2,
**dadurch gekennzeichnet, dass**
die Schicht (13) aus Teilchen mittlerer Körnung besteht.

4. Schichtsystem nach Anspruch 1,
**dadurch gekennzeichnet, dass**
die Zwischenschicht (7) zumindest teilweise aus Teilchen feiner Körnung besteht.

5. Schichtsystem nach Anspruch 1 oder 4,
**dadurch gekennzeichnet, dass**
die Zwischenschicht (7) dicht ist.

6. Schichtsystem nach Anspruch 1,
**dadurch gekennzeichnet, dass**
das Substrat (4) eine kobalt- oder nickelbasierte Superlegierung ist.

7. Schichtsystem nach Anspruch 1, 4 oder 5,
**dadurch gekennzeichnet, dass**
die Zwischenschicht (7) eine Zusammensetzung MCrAlY aufweist,
wobei M für ein Element der Gruppe Eisen, Kobalt oder Nickel steht.

8. Schichtsystem nach Anspruch 1 oder 2,
**dadurch gekennzeichnet, dass**
die groben Teilchen (10) eine Zusammensetzung MCrAlY aufweisen,
wobei M für ein Element der Gruppe Eisen, Kobalt oder Nickel steht.

9. Schichtsystem nach Anspruch 1,
**dadurch gekennzeichnet, dass**
die äußere Schicht (16) eine keramische Schicht ist.

10. Schichtsystem nach Anspruch 1 oder 9,
**dadurch gekennzeichnet, dass**
die äußere Schicht (16) eine Wärmedämmschicht ist.

11. Schichtsystem nach Anspruch 1, , 4, 5 oder 7,
**dadurch gekennzeichnet, dass**
die Zwischenschicht (7) durch Plasmaspritzen aufgebracht ist.

12. Schichtsystem nach Anspruch 1,
**dadurch gekennzeichnet, dass**
das Schichtsystem (1) ein Gasturbinenteil ist.

13. Schichtsystem nach Anspruch 1,
**dadurch gekennzeichnet, dass**
die Teilchen (10) grober Körnung Korndurchmesser grösser 80 Mikrometer, insbesondere grösser 100 Mikrometer aufweisen.

14. Schichtsystem nach Anspruch 3,
**dadurch gekennzeichnet, dass**
die Teilchen mittlerer Körnung für die Schicht (13) Korndurchmesser zwischen 22 Mikrometer und 62 Mikrometer aufweisen.

15. Schichtsystem nach Anspruch 4,
**dadurch gekennzeichnet, dass**
die Teilchen feiner Körnung für die Zwischenschicht (7) Korndurchmesser kleiner 22 Mikrometer, insbesondere 8 und 22 aufweisen.

16. Schichtsystem nach Anspruch 4,
**dadurch gekennzeichnet, dass**
die Teilchen für die Zwischenschicht (7) Korndurchmesser zwischen 8 Mikrometer und 44 Mikrometer aufweisen.

17. Schichtsystem nach Anspruch 15 oder 16,
**dadurch gekennzeichnet, dass**
der Anteil der Teilchen für die Zwischenschicht (7) mit feiner Körnung bei 50% liegt.

## Geänderte Patentansprüche

### Geänderte Patentansprüche gemäss Regel 86(2) EPÜ.

**1.** Schichtsystem (1)
mit einem Substrat (4),
einer Zwischenschicht (7) und
einer äußeren Schicht (16),
Teilchen (10) grober Körnung,
**dadurch gekennzeichnet, dass**
die Teilchen (10) auf der Zwischenschicht (7) vorhanden sind, auf denen die äußere Schicht (16) aufgebracht ist,
wobei die Zwischenschicht (7) eine Zusammensetzung MCrAlY aufweist,
wobei die Teilchen (10) eine Zusammensetzung MCrAlY aufweisen, und
wobei M für ein Element der Gruppe Eisen, Kobalt oder Nickel steht.
